# EUROPÄISCHE PATENTANMELDUNG

(11) **EP 1 772 233 A1**
(43) Veröffentlichungstag der Anmeldung: **11.04.2007**
(21) Anmeldenummer: 06020651.3
(22) Anmeldetag: 30.09.2006
(51) Int. Cl.: B24B 55/02

(54) **Nadeldüsenmodul für die Kühlschmierstoffzufuhr**

(30) Priorität: 08.10.2005 DE 202005015810 U; 30.03.2006 DE 202006005109 U
(71) Anmelder: Grindaix GmbH, 52074 Aachen (DE)
(72) Erfinder: Friedrich, Dirk, 52074 Aachen (DE)
(74) Vertreter: Hemmer, Arnd

(57) **Zusammenfassung**

Die Erfindung betrifft eine Düsenanordnung (1) für die Kühlschmierstoffzufuhr, welche eine Mehrzahl von nebeneinander angeordneten nadelförmigen Düsen (5) aufweist.

## Beschreibung

Die Erfindung betrifft eine Düsenanordnung für die Kühlschmierstoffzufuhr in einer Werkzeugmaschine, insbesondere bei der Schleifbearbeitung.

Z.B. bei der Schleifbearbeitung besteht das Problem, dass Kühlschmierstoffe nicht adäquat an die Zerspanstelle gelangen, was zu Schleifbrand an geschliffenen Bauteilen führen kann. Ferner sind hohe Kühlschmierstoffmengen erforderlich, was zu hohen Entsorgungs- und Wartungskosten führt.

Es ist daher Aufgabe der Erfindung, die Kühlschmierstoffzufuhr in einer Werkzeugmaschine, insbesondere bei Schleifprozessen, zu verbessern.

Diese Aufgabe wird durch eine Düsenanordnung mit den im Anspruch 1 angegebenen Merkmalen gelöst. Bevorzugte Ausführungsformen ergeben sich aus den Unteransprüchen, der nachfolgenden Beschreibung sowie den Figuren.

Erfindungsgemäß ist eine Düsenanordnung in Form eines Nadeldüsenmoduls vorgesehen, welches eine Mehrzahl von nebeneinander, insbesondere parallel zueinander angeordneten nadelförmigen Düsen bzw. Nadeldüsen aufweist. Jede dieser nadelförmigen Düsen hat an ihrem freien axialen Ende eine Austrittsöffnung, aus welcher Kühlschmierstoff austritt. Der erfindungswesentliche Gedanke liegt somit darin, den Kühlschmierstoff nicht durch eine oder wenige große Kühlschmierstoffdüsen der Bearbeitungsstelle zwischen Schleifscheibe und Werkstück zuzuführen, sondern durch eine Vielzahl nadelförmiger Düsen, d.h. von Düsen mit vergleichsweise kleinem Querschnitt. Diese kleinen Düsen können näher an der Bearbeitungsstelle positioniert werden. Die Zuführung des Kühlschmierstoffes erfolgt somit unmittelbar an der Zerspanstelle. Dabei kann ein an einem rotierenden Werkstück oder Werkzeug anliegendes Luftpolster, z.B. das an einer Schleifscheibe anliegende Luftpolster, durch eine hohe Impulswirkung der einzelnen Kühlschmierstoffstrahlen, welche aus den nadelförmigen Düsen austreten, durchdrungen werden kann. Dabei wird der Kühlschmierstoff nach Austritt aus den Düsen aufgrund der Rotation des Werkstückes oder des Werkzeuges, z.B. der Schleifscheibe, laminar auf die Umfangs- bzw. Scheibenumfangsgeschwindigkeit beschleunigt. Durch diese optimierte Zuführung und Verteilung des Kühlschmierstoffes kann bessere Wirkung an der Zuspannstelle sowie eine Reduktion des Kühlschmierstoffbedarfs erreicht werden.

Die erfindungsgemäße Düsenanordnung eignet sich insbesondere für Schleifmaschinen, d.h. für die Kühlschmierstoffzufuhr bei der Schleifbearbeitung. Jedoch kann diese Düsenordnung auch bei allen anderen zerspanenden Bearbeitungsprozessen zum Einsatz kommen und in entsprechende Werkzeugmaschinen, beispielsweise Dreh- oder Fräsmaschinen integriert werden.

Der durch die Düsenanordnung zugeführte Kühlschmierstoff kann ein herkömmlicher Kühlschmierstoff sein, wie er üblicherweise in der Werkzeugmaschine, in welcher die Düsenanordnung zur Anwendung kommt, verwendet wird. Der Kühlschmierstoff kann insbesondere ein flüssiger Kühlschmierstoff, beispielsweise eine Öl-Wasser-Emulsion, ein wasserbasierter oder ölbasierter Kühlschmierstoff sein.

Durch die vergleichsweise langen Kanäle im Inneren der nadelförmigen Düsen mit kleinem Querschnitt kommt es innerhalb der nadelförmigen Düse zu einer Beschleunigung des Kühlschmierstoffes, wobei insbesondere eine laminare Strömung im Inneren der Nadeldüse erreicht wird. Dies sorgt dann für die große Impulswirkung des aus der Nadeldüse ausströmenden Kühlschmierstoffes.

Vorzugsweise sind die nadelförmigen Düsen derart angeordnet, dass ihre Austrittsöffnungen auf einer Linie liegen. Dabei kann diese Linie eine gerade Linie bilden. Eine derartige Anordnung einer Vielzahl von Nadeldüsen, deren Austrittsöffnungen nebeneinander auf einer geraden Linie liegen, ist beispielsweise bei einer Schleifscheibe mit zylindrischer Außenkontur erwünscht. Für den Fall, dass das Werkzeug, z.B. die Schleifscheibe, eine profilierte Außenkontur aufweist, kann auch die Anordnung der Nadeldüsen so gewählt werden, dass die Austrittsöffnungen auf einer entsprechend der Kontur der Schleifscheibe geformten Linie liegen. Diese Linie entspricht dann vorzugsweise dem Verlauf des Kontaktbereiches zwischen Werkstück und Schleifscheibe. Auf diese Weise kann auch bei einer konturierten Schleifscheibe erreicht werden, dass die Austrittsöffnungen möglichst nah an der Bearbeitungsstelle liegen, um eine optimierte Kühlschmierstoffzufuhr zu gewährleisten.

Die nadelförmigen Düsen weisen vorzugsweise im Inneren jeweils einen Kanal und an einem freien Ende eine Austrittsöffnung für Kühlschmierstoff auf. Der Kanal im Inneren der Düsen ist dabei so gebildet, dass besonders bevorzugt eine möglichst laminare Strömung des Kühlschmierstoffes bereits im Inneren der nadelförmigen Düse bzw. Nadeldüse realisiert wird. Um einen optimalen laminaren Kühlschmierstoffaustritt aus der Austrittsöffnung zu erreichen, weisen die Nadeldüsen eine bestimmte Länge auf, um eine definierte laminare Strömung im Inneren der Nadeldüse sicherzustellen.

Die Mehrzahl von nadelförmigen Düsen ist vorzugsweise mit einem Verteilerelement verbunden, welches zumindest einen Kühlschmierstoffeingang aufweist. Dieses Verteilerelement bzw. dieser Verteilerblock stellt die Verteilung des Kühlschmierstoffes zu den einzelnen Nadeldüsen sicher. Das Verteilerelement wird mit dem Kühlschmierstoffeingang an eine vorhandene Kühlschmierstoffversorgung einer Werkzeugmaschine, z.B. Schleifmaschine angeschlossen. Die nadelförmigen Düsen sind auf geeignete Weise an dem Verteilerelement befestigt, beispielsweise mit diesem verschweißt oder auf andere Weise nach außen abgedichtet verbunden sein, so dass die Kanäle im Inneren der Düsen mit einem Kanal im Inneren des Verteilerelementes in Verbindung stehen.

Das Verteilerelement ist bevorzugt derart ausgebildet, dass es mit einem weiteren Verteilerelement mechanisch und/oder fluidführend verbindbar ist. Dies ermöglicht einen modularen Aufbau der Düsenanordnung, bei welchem unterschiedliche Anzahlen von Verteilerelementen und damit von nadelförmigen Düsen miteinander kombiniert werden können, um eine bestimmte Breite einer Schleifscheibe bzw. Bearbeitungsstelle mit Nadeldüsen abdecken zu können. Die einzelnen Verteilerelemente weisen jeweils eine vorgegebene Anzahl von Düsen auf, welche an den Verteilerelementen angebunden sind. Es können z. B. baukastenartig auch unterschiedlich breite Verteilerelemente mit bestimmten Anzahlen von Düsen vorgehalten werden, welche dann entsprechend der gewünschten Schleifspaltbreite miteinander kombiniert bzw. verbunden werden. Dabei können die Verteilerelemente rein mechanisch verbunden werden, so dass jedes Verteilerelement seine eigene Kühlschmierstoffzufuhr über einen eigenen Kühlschmierstoffeingang aufweist, welcher dann mit einer Kühlschmierstoffversorgung der Werkzeugmaschine verbunden wird. Alternativ ist es möglich, die einzelnen Verteilerelemente auch fluidleitend miteinander zu verbinden, so dass nicht jedem Verteilerelement der Kühlschmierstoff direkt von der Werkzeugmaschine, sondern durch ein angrenzendes Verteilerelement zugeführt wird. Um die Verteilerelemente fluidleitend miteinander verbinden zu können, weisen sie vorzugsweise an ihren Axialenden Öffnungen auf, mit welchen sie aneinander gekuppelt werden, so dass die Fluidkanäle im Inneren der Verteilerelemente bei Aneinandersetzen der Verteilerelemente miteinander verbunden werden. Werden diese Öffnungen nicht gebraucht, können sie beispielsweise durch Stopfen oder andere geeignete Verschlusselemente verschlossen werden. Es können jedoch auch Verbindungsleitungen zwischen den einzelnen Verteilerelementen angeordnet werden, um diese fluidleitend zu verbinden.

Bevorzugt ist in dem Verteilerelement, vorzugsweise im Kühlschmierstoffeingang, ein Einstellelement zum Einstellen der Durchflussmenge von Kühlschmierstoff angeordnet, welcher der Düsen zugeführt wird. Dies ermöglicht eine Regulierung der den einzelnen Düsen über das Verteilerelement zugeführten Kühlschmierstoffmenge, so dass eine definierte Kühlschmierstoffmenge aus den Düsen austreten kann.

Die Nadeldüsen und vorzugsweise ein diese verbindendes Verteilerelement sind bevorzugt an zumindest einem Verstellelement befestigt. Dies ermöglicht die Einstellung der Nadeldüsen und des Verteilerelementes in der gewünschten Position zur Bearbeitungsstelle, so dass die Austrittsöffnungen der Nadeldüsen im gewünschten Winkel und Abstand, vorzugsweise möglichst nah an die Bearbeitungsstelle gebracht werden können. Um eine optimierte Ausrichtung der Nadeldüsen zu erreichen, könnten diese beispielsweise auch biegbar ausgestaltet sein, so dass sie auch leicht an die Kontur des Bearbeitungsspaltes zwischen Schleifscheibe und Werkstück angepasst positioniert werden können. Weiter bevorzugt sind die Düsen einzeln oder gemeinsam, insbesondere mit dem Verteilerelement, in ihrer Winkellage und/oder axialen Position verstellbar. So ist es möglich, die Austrittsöffnungen in einem definierten Abstand und in einem definierten Winkel zur Bearbeitungsstelle, d.h. z.B. zur Schleifscheibe und insbesondere zur Kontaktstelle zwischen Schleifscheibe und Werkstück auszurichten.

Die Düsen sind wie oben beschrieben bevorzugt mit ihren Austrittsöffnungen an der Bearbeitungsstelle zwischen Werkzeug, z.B. Schleifwerkzeug, und Werkstück angeordnet. Dabei decken die nebeneinander liegenden Düsen zweckmäßigerweise gemeinsam eine Breite ab, welche der Breite der Bearbeitungsstelle zwischen Werkzeug, insbesondere einem Schleifwerkzeug, und Werkstück entspricht. Auf diese Weise wird sicher gestellt, dass die gesamte Bearbeitungsstelle ausreichend mit Kühlschmierstoff versorgt wird. Bei dieser Anordnung ist vorzugsweise eine nadelförmige Düse bzw. Nadeldüse pro 2 mm bis 8 mm Breite der Bearbeitungsstelle vorgesehen, um eine gleichmäßige Verteilung des Kühlschmierstoffes zu gewährleisten.

Nachfolgend wird die Erfindung beispielhaft anhand der beigefügten Figuren beschrieben. In diesen zeigt.
- Fig. 1: schematisch eine Schnittansicht einer Düsenanordnung bzw. eines Nadeldüsenmoduls gemäß der Erfindung,
- Fig. 2: schematisch eine Seitenansicht des Moduls gemäß Fig. 1,
- Fig. 3: schematisch den Anschluss des erfindungsgemäßen Nadeldüsenmoduls,
- Fig. 4: eine Anordnung von zwei Nadeldüsenmodulen,
- Fig. 5: eine Einbauskizze des erfindungsgemäßen Nadeldüsenmoduls und
- Fig. 6: eine Detailansicht des Düsenblockes.

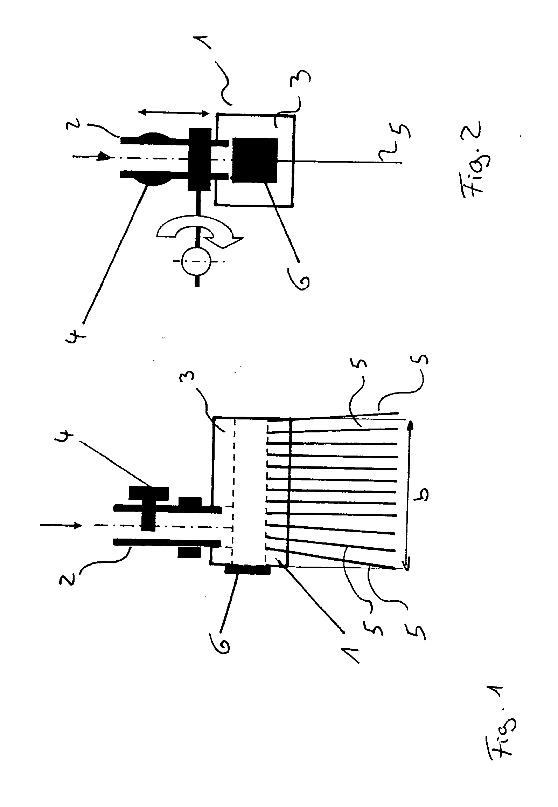

Figur 1 zeigt schematisch ein Nadeldüsenmodul 1. Das Nadeldüsenmodul 1 weist einen Zufluss 2 auf, welcher mit der Kühlschmierstoffzufuhr in der Schleifmaschine verbindbar ist. Der Zufluss 2 ist mit einem Verteilerelement bzw. Verteilerblock 3 verbunden. Am Zufluss 2 ist eine Durchflussregelung 4 in Form einer Stellschraube angeordnet, mit welcher die Durchflussmenge in den Verteilerblock 3 reguliert werden kann. Ausgehend von dem Verteilerblock 3 erstreckt sich eine Vielzahl von nadelförmigen Düsen bzw. Nadeldüsen 5 in der Weise, dass ihre freien Enden nebeneinander auf einer Linie liegen. Die Nadeldüsen 5 weisen in ihrem Inneren einen Kanal auf, welcher mit dem Strömungskanal im Inneren des Verteilerblockes 3 in Verbindung steht. So wird der Kühlschmierstoff 2 durch den Zufluss 2 und den Verteilerblock 3 den einzelnen Nadeldüsen 5 zugeführt und tritt dann an deren freien, d. h. dem Verteilerblock 3 abgewandten Enden, welche Austrittsöffnungen aufweisen, aus. Der Strömungskanal im Inneren des Verteilerblockes 3 ist zum Stirnende des Verteilerblockes 3 durch einen Verschluss 6 beispielsweise in Form einer Schraube oder eines Stopfens verschlossen.

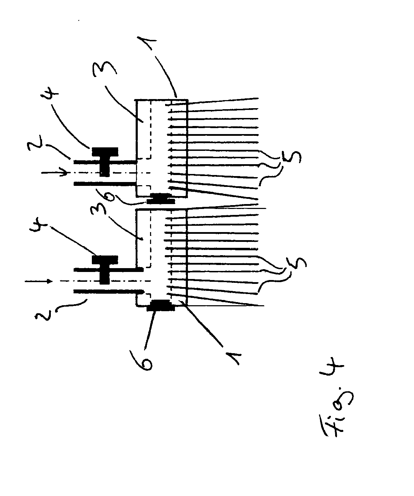

Das in Figur 1 gezeigte Nadeldüsenmodul 1 weist eine Breite b von beispielsweise 50 mm auf. Es sind jedoch auch andere Breiten denkbar, wobei vorzugsweise bestimmte Standardbreiten bereitgestellt werden, welche dann miteinander kombiniert werden können, um eine gewünschte Gesamtbreite des Nadeldüsenmoduls bzw. der Nadeldüsenanordnung bereitzustellen, welche der Schleifscheibenbreite bzw. der Breite der Bearbeitungszone zwischen Schleifscheibe und Werkstück entspricht. Hierzu können dann mehrere der in Figur 1 gezeigten Nadeldüsenmodule miteinander verbunden werden, wie es in Figur 4 gezeigt ist.

In Figur 4 sind zwei der in Figur 1 gezeigten Nadeldüsenmodule nebeneinander angeordnet gezeigt. Hier weist jedes Nadeldüsenmodul 1 einen eigenen Zufluss 2 auf. Alternativ könnten die Nadeldüsenmodule 1 jedoch auch an ihren Stirnenden, welche durch den Verschluss 6 verschlossen sind, miteinander strömungsleitend verbunden werden, so dass nur ein zentraler Zufluss 2 erforderlich ist.

In Figur 2 ist das in Figur 1 und 4 dargestellte Nadeldüsenmodul in einer Seitenansicht gezeigt. Wie in Figur 2 schematisch angedeutet, wird das Nadeldüsenmodul 1 in axialer Richtung, d. h. in Richtung der Längsachsen der Nadeldüsen 5 verstellbar und um eine Achse parallel zur Längsachse des Verteilerblockes 3, d. h. normal zu den Nadeldüsen 5 schwenkbar befestigt, um die Austrittsöffnungen der Nadeldüsen 5 möglichst nah an die Bearbeitungsstelle bringen und definiert positionieren zu können.

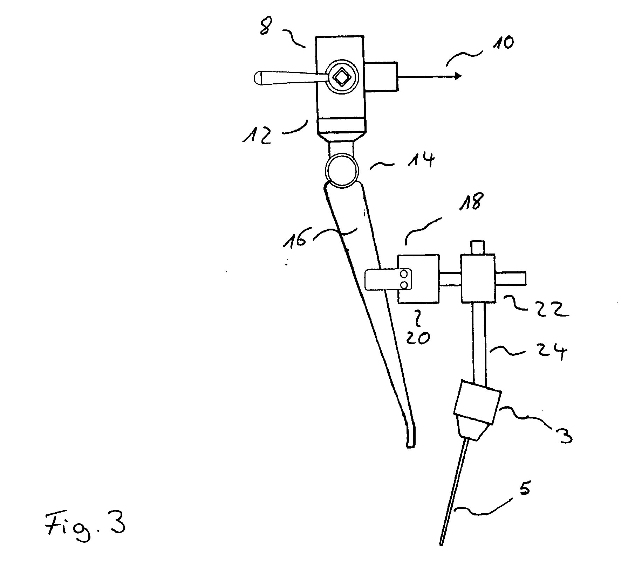

Die Anbringung des Nadeldüsenmoduls ist in Figur 3 in einem Beispiel näher gezeigt. In dem Beispiel in Figur 3 ist ein Mehrwegekugelhahn 8 vorgesehen, um bei der Kühlschmierstoffzufuhr zwischen konventionellem und Nadeldüsenbetrieb umschalten zu können. Der Kugelhahn 8 ist an eine Kühlschmierstoffleitung 10 angeschlossen, welche zu der Nadeldüseneinheit führt. Ferner ist der Kugelhahn 8 mit einem Kühlschmierstoffzulauf 12 zur konventionellen Düse 16 über ein Verteilerrohr 14 verbunden. An der konventionellen Düse 16 ist im hier gezeigten Beispiel die Halterung 18 für die Nadeldüseneinheit angeschweißt. Es ist aber auch eine andere geeignete Befestigung möglich. Ferner kann die Nadeldüseneinheit auch an anderer Stelle in der Schleifmaschine befestigt werden. Die Befestigung der Nadeldüseneinheit erfolgt hier über eine Verteilerleiste 20 und ein Kreuzgelenk 22 zur Positionierung des Verteiler- bzw. Nadeldüsenblockes 3. Der Nadeldüsenblock 3 ist über eine Aufnahme und Verstelleinrichtung 24 mit dem Kreuzgelenk 22 verbunden. Ausgehend von dem Nadeldüsenblock 3 erstrecken sich, wie vorangehend beschrieben, die Nadeldüsen 5.

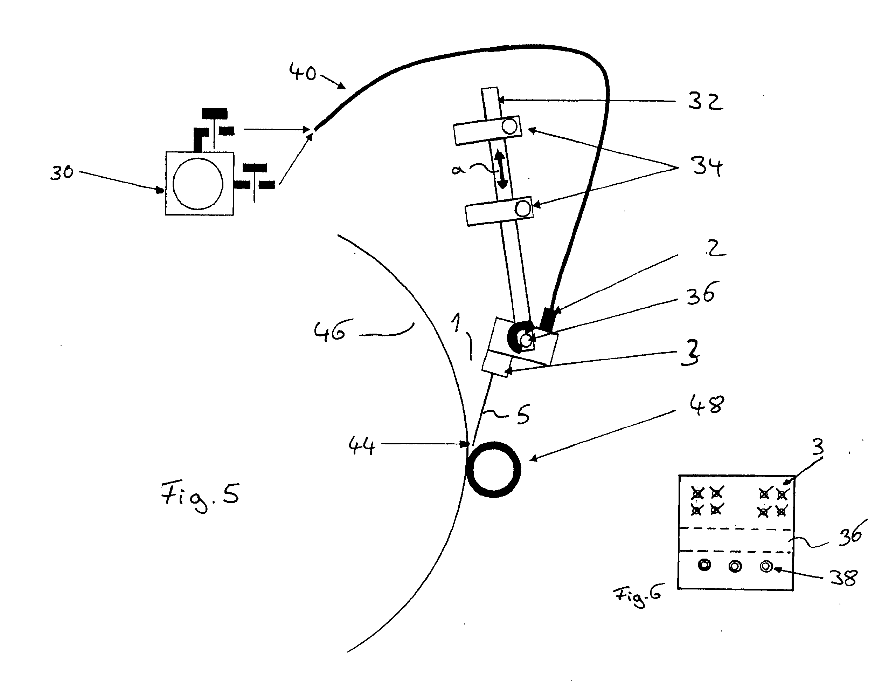

Anhand von Figur 5 wird noch einmal an einem Beispiel die Anordnung der Nadeldüsen 5 an der Bearbeitungsstelle erläutert.

Zum Anschluss an die bestehende Maschinenperipherie ist ein Verteilerblock 30 vorgesehen, welcher an die Hauptkühlschmierstoffzufuhr der Maschine angeschlossen wird. Der Verteilerblock 30 ist über eine Kühlschmierstoffleitung 40 mit dem Zufluss 2 des Verteilerblockes 3 bzw. Nadeldüsenblockes 3 des Nadeldüsenmoduls 1 verbunden. Von diesem ausgehend, erstrecken sich die Nadeldüsen 5. Zur Befestigung des Verteilerblockes 3 in der Werkzeugmaschine sind Wellenböcke 34 vorgesehen, welche an der Maschinenstruktur fixiert werden. In den Wellenböcken 34 ist ein Verstellelement 32 in axialer Richtung a verstellbar geführt. An den Verstellelementen 32 ist der Verteilerblock 3 an einer Schwenkachse 36 in seiner Winkellage verstellbar befestigt. Dies ermöglicht, den Verteilerblock 3 sowohl in axialer Richtung als auch in seiner Winkellage so einzustellen, dass die freien Enden 44 der Nadeldüsen 5 möglichst nah an der Bearbeitungsstelle zwischen Schleifscheibe 46 und Werkstück 48 angeordnet werden. So kann der Kühlschmierstoff direkt an die Bearbeitungsstelle geführt werden und dort das Luftpolster, welches die Schleifscheibe 46 umgibt, aufgrund der hohen Impulswirkung, mit welcher der Kühlschmierstoff aus den Nadeldüsen 5 austritt, durchdringen. Hierzu ist es wichtig, dass bereits in den Nadeldüsen 5 eine möglichst laminare Strömung ohne Turbulenzen erzielt wird. Die Länge der Nadeldüsen 5 und deren Durchmesser wird in Abhängigkeit der gewünschten Impulswirkung an den Einsatzfall angepasst.

Die Druckversorgung kann je nach Anwendungsfall variieren. Der gewöhnliche Schleifprozess kommt mit einem Kühlschmierstoffdruck von bis zu p = 2 bar Zuführdruck im Düsenkörper aus. Bei hoher Gefahr einer thermischen Überlastung der Werkstückrandzone empfiehlt es sich, den Zuführdruck zu erhöhen. So kann je nach Einsatzfall der Druck bis zu 8 bar oder auch bis zu 30 bar betragen.

Hinsichtlich der Justage der Nadeldüseneinheit 1 empfiehlt es sich, das Düsenende 44 der Nadeldüsen 5 möglichst nah an die Bearbeitungsstelle (Kontaktstelle zwischen Schleifwerkzeug bzw. Schleifscheibe 46 und Werkstück 48) zuzuführen, ohne dass hierbei das Schleifwerkzeug oder das Werkstück berührt werden. Zur Durchdringung des an der Schleifscheibe 46 anliegenden Luftpolsters empfiehlt sich eine möglichst zur Bearbeitungsstelle hin gerichtete Düseneinheit 1. Die Einstellung erfolgt durch Lösen der Klemmmechanismen an den Wellenböcken 34, wonach das Verstellelement 32 in axialer Richtung a verstellt werden kann. Durch Lösen der Klemmungen an der Schwenkachse 36 kann der Verteilerblock 3 mit den Nadeldüsen 5 um die Schwenkachse 36 verschwenkt werden. Hierzu sind, wie in Figur 6 gezeigt, an dem Verteilerblock 3 Klemmschrauben 38 vorgesehen.

### Bezugszeichenliste

- 1 -: Nadeldüsenmodul
- 2 -: Zufluss
- 3 -: Verteilerblock
- 4 -: Durchflussregelung
- 5 -: Nadeldüsen
- 6 -: Verschluss
- 8 -: Kugelhahn
- 10 -: Kühlschmierstoffleitung
- 12 -: Kühlschmierstoffzulauf
- 14 -: Verteilerrohr
- 16 -: konventionelle Schmierstoffdüse
- 18 -: Halterung
- 20 -: Verteilerleiste
- 22 -: Kreuzgelenk
- 24 -: Aufnahme
- 30 -: Verteilerblock
- 32 -: Verstellelement
- 34 -: Wellenbock
- 36 -: Schwenkachse
- 38 -: Klemmschrauben
- 40 -: Kühlschmierstoffleitung
- 44 -: Düsenende
- 46 -: Schleifscheibe
- 48 -: Werkstück

- a -: axiale Richtung
- b -: Breite

## Patentansprüche

1. Düsenanordnung (1) für die Kühlschmierstoffzufuhr, welche eine Mehrzahl von nebeneinander angeordneten nadelförmigen Düsen (5) aufweist.

2. Düsenanordnung nach Anspruch 1, bei welcher die nadelförmigen Düsen (5) derart angeordnet sind, dass ihre Austrittsöffnungen auf einer Linie liegen.

3. Düsenanordnung nach Anspruch 1 oder 2, bei welcher die einzelnen nadelförmigen Düsen (5) in ihrem Inneren jeweils einen Kanal und an einem freien Ende (44) eine Austrittsöffnung für Kühlschmierstoff aufweisen.

4. Düsenanordnung nach einem der vorangehenden Ansprüche, bei welcher jeweils eine Mehrzahl von nadelförmigen Düsen (5) mit einem Verteilerelement (3) verbunden ist, welches zumindest einen Kühlschmierstoffeingang (2) aufweist.

5. Düsenanordnung nach Anspruch 4, bei welchem das Verteilerelement (3) derart ausgebildet ist, dass es mit einem weiteren Verteilerelement (3) mechanisch und/oder Fluid führend verbindbar ist.

6. Düsenanordnung nach Anspruch 4 oder 5, bei welcher in dem Verteilerelement (3), vorzugsweise im Kühlschmierstoffeingang (2) ein Einstellelement (4) zum Einstellen der Durchflussmenge angeordnet ist.

7. Düsenanordnung nach einem der vorangehenden Ansprüche, bei welchem die Düsen (5) und vorzugsweise ein diese verbindendes Verteilerelement (3) an zumindest einem Verstellelement (22; 32, 34, 36) befestigt sind.

8. Düsenanordnung nach einem der vorangehenden Ansprüche, bei welcher die Düsen (5) in ihrer Winkellage und/oder axialen Position verstellbar sind.

9. Düsenanordnung nach einem der vorangehenden Ansprüche, bei welcher die Düsen (5) mit ihren Austrittsöffnungen an der Bearbeitungsstelle zwischen Werkzeug (46), insbesondere einem Schleifwerkzeug, und Werkstück (48) angeordnet sind.

10. Düsenanordnung nach einem der vorangehenden Ansprüche, bei welcher die nebeneinander liegenden Düsen (5) gemeinsam eine Breite abdecken, welcher der Breite der Bearbeitungsstelle zwischen Werkzeug (46), insbesondere einem Schleifwerkzeug, und Werkstück (48) entspricht.

11. Düsenanordnung nach Anspruch 10, bei welcher eine nadelförmige Düse pro 2 mm bis 8 mm Breite der Bearbeitungsstelle vorgesehen ist.

12. Düsenanordnung nach einem der vorangehenden Ansprüche, welche in einer Schleifmaschine angeordnet ist.
